# EUROPEAN PATENT APPLICATION

(11) **EP 1 970 984 A1**
(43) Date of publication of application: **17.09.2008**
(21) Application number: 06843765.6
(22) Date of filing: 27.12.2006
(51) Int. Cl.: H01M 4/96, H01M 4/88, H01M 4/90, H01M 8/10

(54) **CATALYST FOR FUEL CELL ELECTRODE, PROCESS FOR PRODUCING CATALYST FOR FUEL CELL ELECTRODE, FILM-ELECTRODE ASSEMBLY, AND FUEL CELL**

(30) Priority: 28.12.2005 JP 2005379512
(71) Applicant: Toyota Jidosha Kabushiki Kaisha, Toyota-shi, Aichi 471-8571 (JP)
(72) Inventor: YOSHIDA, Satoshi, Toyota-shi, Aichi 4718571 (JP); NAKASHIMA, Naotoshi, Fukuoka-shi, Fukuoka 8128581 (JP); ASAOKA, Takahiko, Aichi 4801192 (JP); HASEGAWA, Masaki, Aichi 4801192 (JP)
(74) Representative: Kuhnen & Wacker
(86) International application number: PCT/JP2006/326396
(87) International publication number: WO 2007/077972

(57) **Abstract**

This invention provides a catalyst for a fuel cell electrode, a process for producing a catalyst for a fuel cell electrode, a membrane electrode assembly, and a fuel cell, which are advantageous in suppressing aggregation of a carbon support such as carbon nanotubes, and in closely contacting the three of the carbon support, a catalyst component and an electrolyte component with each other. A catalyst for a fuel cell electrode contains a carbon support (e.g. , CNTs) having a pi-conjugated system, an electrolyte component having an aromatic ring, and a catalyst component. A process for producing a catalyst for a fuel cell electrode. By contacting, in a solvent, a carbon support (e.g., CNTs) having a pi-conjugated system, an electrolyte component having an aromatic ring, and a catalyst component with each other, the carbon support can be modified with the electrolyte component and loaded with the catalyst component.

## Description

### Technical Field

The present invention relates to a catalyst for a fuel cell electrode having a carbon support, a process for producing a catalyst for a fuel cell electrode, a membrane electrode assembly and a fuel cell.

### Background Art

A fuel cell comprises a membrane electrode assembly, a fuel supply member disposed on one outer side of the membrane electrode assembly and supplying a fuel, and an oxidant supply member disposed on the other outer side of the membrane electrode assembly and supplying an oxidant. The membrane electrode assembly includes an electrolyte component membrane having ionic conductivity, catalyst layers disposed on both sides of the electrolyte component membrane, and gas diffusion layers disposed on outer sides of the catalyst layers. In order to improve fuel cell power output, it is requested to closely contact the three (what are called three-phase boundaries) of a carbon support which is an electron conductor, a catalyst component for enhancing reactivity of the fuel and the oxidant, and an electrolyte component which is an ionic conductor with each other.

However, the carbon support used in a catalyst for a fuel cell electrode is sometimes liable to aggregate, depending on circumstances. Therefore, there is a limit in closely contacting the three of the carbon support, the catalyst component and the electrolyte component with each other. Hence, there are cases where three-phase boundaries are not sufficiently formed.

Especially, carbon nanotubes which have been developed as carbon materials in recent years (Non-Patent Document 1) are liable to aggregate. The carbon nanotubes tend to have a bundle structure in which a large number of tubes are bundled, and are insoluble in solvents. Therefore, when the carbon nanotubes are used as a carbon support for a fuel cell electrode, the degree of dispersion of the carbon nanotubes is low, the carbon nanotubes are liable to remain aggregated, and the catalyst component and the electrolyte component are difficult to exist on a surface of the carbon nanotubes. Therefore, there is a limit in closely contacting the three of the carbon nanotubes, the catalyst component and the electrolyte component with each other. Hence, three-phase boundaries are not sufficiently formed and there is a limit in improving performance of a fuel cell.

Under these circumstances, Patent Document 1 discloses an electrode for a fuel cell in which reaction sites are introduced on an outer surface of carbon nanotubes (hereinafter sometimes abbreviated as CNTs) by treating the carbon nanotubes with nitric acid or a combination of nitric acid and sulfuric acid. This is advantageous in suppressing aggregation of the carbon nanotubes and in closely contacting the three of the catalyst component, the carbon nanotubes and the electrolyte component with each other.

[Non-Patent Document 1] S. Iijima, Nature, 354, 56(1991)

[Patent Document 1] Japanese Unexamined Patent Publication No.2004-253224

### Disclosure of Invention

It is an object of the present invention to provide a catalyst for a fuel cell electrode, a process for producing a catalyst for a fuel cell electrode, a membrane electrode assembly and a fuel cell which are advantageous in suppressing aggregation of a carbon support such as carbon nanotubes and in closely contacting the three of a carbon support such as carbon nanotubes, a catalyst component and an electrolyte component with each other by improving affinity of the carbon support, such as carbon nanotubes and the electrolyte component.

A catalyst for a fuel cell electrode according to a first aspect is characterized in containing a carbon support having a pi-conjugated system, an electrolyte component having an aromatic ring and a catalyst component.

A process for producing a catalyst for a fuel cell electrode according to a second aspect is characterized in contacting, in a solvent, a carbon support having a pi-conjugated system, an electrolyte component having an aromatic ring, and a catalyst component, thereby modifying the carbon support with the electrolyte component and loading the catalyst component on the carbon support.

A process for producing a catalyst for a fuel cell electrode according to a third aspect is characterized in comprising a loading step of contacting, in a solvent containing a dispersant, a carbon support having a pi-conjugated system and a catalyst component, thereby loading the catalyst component on the carbon support; and a modifying step of contacting the carbon support loaded with the catalyst component and an electrolyte component having an aromatic ring, thereby modifying the carbon support with the electrolyte component.

[Advantages of the Invention]

According to the catalyst for a fuel cell electrode according to the first aspect, a carbon support has pi electrons. Owing to affinity of the pi electrons of the carbon support and pi electrons of an aromatic ring of an electrolyte component, that is to say, owing to pi-pi stacking, the carbon support and the electrolyte component can approach each other with good affinity. Therefore, the electrolyte component tends to exist among the carbon support. Hence, aggregation of the carbon support is suppressed. As a result, a catalyst component and the electrolyte component tend to exist in the vicinity of the carbon support. This is advantageous in closely contacting the three of the carbon support, the catalyst component and the electrolyte component with each other. Hence, three-phase boundaries are satisfactorily formed, which is advantageous in improving efficiency of power generating reaction at catalyst layers of a fuel cell.

According to the process for producing a catalyst for a fuel cell electrode according to the second aspect, a carbon support having a pi-conjugated system, an electrolyte component having an aromatic ring and a catalyst component are contacted with each other in a solvent, thereby modifying the carbon support with the electrolyte component and loading the catalyst component on the carbon support. In this case, owing to affinity of pi electrons of the carbon support and pi electrons of the aromatic ring of the electrolyte component, that is to say, owing to pi-pi stacking, the carbon support and the electrolyte component can approach each other with good affinity. Therefore, the electrolyte component can serve as a dispersant for dispersing the carbon support. Therefore, the electrolyte component tends to exist among the carbon support. Hence, aggregation of the carbon support is suppressed. This is advantageous in closely contacting the three of the carbon support, the catalyst component and the electrolyte component with each other. Hence, three-phase boundaries are satisfactorily formed, which is advantageous in improving efficiency of power generating reaction at catalyst layers of a fuel cell.

Moreover, according to the production process of the second aspect, because three-phase boundaries are formed in preparing a catalyst, process simplification and cost reduction can be achieved.

The process for producing a catalyst for a fuel cell electrode according to the third aspect is characterized in comprising a loading step of contacting, in a solvent containing a dispersant, a carbon support having a pi-conjugated system and a catalyst component, thereby loading the catalyst component on the carbon support; and a modifying step of contacting the carbon support loaded with the catalyst component and an electrolyte component having an aromatic ring, thereby modifying the carbon support with the electrolyte component. In this case, a carbon support having a pi-conjugated system and a catalyst component are contacted with each other in a solvent containing a dispersant, thereby loading the catalyst component on the carbon support. Subsequently, the carbon support loaded with the catalyst component and an electrolyte component having an aromatic ring are contacted with each other, thereby modifying the carbon support with the electrolyte component. The modification means that the carbon support and the electrolyte component are held with good affinity. In this case, owing to pi-pi stacking based on pi electrons, the carbon support and the electrolyte component can approach each other with good affinity. Therefore, the electrolyte component tends to exist among the carbon support. Hence, aggregation of the carbon support is suppressed. This is advantageous in closely contacting the three of the carbon support, the catalyst component and the electrolyte component with each other. Hence, three-phase boundaries are satisfactorily formed, which is advantageous in improving efficiency of power generating reaction at catalyst layers of a fuel cell.

### Brief Description of Drawings

Figure 1A is a diagram showing a reaction scheme for synthesizing an example of wholly aromatic polyimide used in the present invention.

Figure 1B is a diagram showing a reaction scheme for synthesizing another example of wholly aromatic polyimide used in the present invention.

Figure 1C is a diagram showing a reaction scheme for synthesizing still another example of wholly aromatic polyimide used in the present invention.

Figure 2 is a graph showing, as an example, visible to near-infrared absorption spectra of DMSO solutions of SWNTs and wholly aromatic polyimide measured in a carbon nanotube solubilization test according to the present invention.

Figure 3 is a view showing, as an example, an AFM image of single-walled carbon nanotubes (SWNTs) and polyimide obtained by the present invention.

Figure 4 is a view showing, as an example, a three-dimensional fluorescence spectrum of a DMSO solution of single-walled carbon nanotubes (SWNTs) and wholly aromatic polyimide according to the present invention.

Figure 5 is a view showing, as an example, absorption spectra of mixtures of a DMSO solution of single-walled carbon nanotubes (SWNTs) and wholly aromatic polyimide, and another solvent.

Figure 6a is a view showing FT-IR measurements of an example of polyimide used in the present invention.

Figure 6b is a view showing ¹H-NMR measurements of the example of polyimide used in the present invention.

Figure 7a is a view showing FT-IR measurements of another example of polyimide used in the present invention.

Figure 7b is a view showing ¹H-NMR measurements of the example of polyimide used in the present invention.

Figure 8 is a view showing FT-IR measurements of still another example of polyimide used in the present invention.

Figure 9 is a flowchart showing an embodiment of the production process according to the second aspect.

Figure 10 is a flowchart showing an embodiment of the production process according to the third aspect.

Figure 11 is a configuration diagram schematically showing a catalyst for a fuel cell electrode according to a conventional example.

Figure 12 is a configuration diagram schematically showing a catalyst for a fuel cell electrode according to the present invention.

Figure 13 is a cross sectional view schematically showing an exploded fuel cell.

Figure 14 is a view showing the chemical structure of an example of electrolyte component polymer.

### Best Mode for Carrying Out the Invention

(1) The catalyst for a fuel cell electrode according to the first aspect contains a carbon support having a pi-conjugated system, an electrolyte component having an aromatic ring and a catalyst component. The carbon support has pi electrons. Pi electrons mean electrons capable of forming a π bond. The electrolyte component can exhibit ionic conductivity (proton conductivity). The aromatic ring of the electrolyte component has pi electrons. The electrolyte component can comprise wholly aromatic polyimide. Especially, the electrolyte component can comprise wholly aromatic polyimide having a repeating unit represented by the aforementioned general formula [I].

Owing to affinity of the pi electrons of the carbon support and the pie electrons of the aromatic ring of the electrolyte component, that is to say, owing to pi-pi stacking, the carbon support and the electrolyte component can exist in the vicinity of each other and aggregation of the carbon support is suppressed. Therefore, the frequency that the electrolyte component and the catalyst component exist in a group of carbon support is increased. This is advantageous in closely contacting the three of the carbon support, the catalyst component and the electrolyte component with each other. Hence, what are called three-phase boundaries are satisfactorily formed.

Note that in order to efficiently make the electrolyte component exist among the carbon support, it is preferable that a physical approach means for increasing the frequency that the carbon support and the electrolyte component approach each other is added to a coexisting state of the carbon support and the electrolyte component (for example, a state where the carbon support and the electrolyte component coexist in a fluid material such as a solvent) . Examples of the physical approach means include a means for applying sonic waves such as ultrasonic waves to a material in which the carbon support and the electrolyte component coexist. As the physical approach means, it is also possible to use a means for mechanically stirring the material in which the carbon support and the electrolyte component coexist such as a mill. If aggregated carbon support is separated from each other, the probability that the electrolyte component exists among the carbon support is increased by pi-pi stacking.

Here, when a physical approach means such as ultrasonic waves is added to a state where the carbon support and the electrolyte component coexist in a fluid material such as a solvent, subsequently the fluid material can be separated into solids and liquid, for example, by centrifugal separation. The carbon support such as carbon nanotubes tends to aggregate around the solids. In the liquid, the carbon support such as carbon nanotubes is dispersed in a solubilized state.

(2) The process for producing a catalyst for a fuel cell electrode according the second aspect can produce a catalyst for a fuel cell electrode according to the first aspect by contacting, in a solvent, a carbon support having a pi-conjugated system, an electrolyte component having an aromatic ring and a catalyst component, thereby modifying the carbon support with the electrolyte component and loading the catalyst component on the carbon support. The aromatic ring of the electrolyte component has pi electrons. Owing to affinity of pie electrons of the carbon support and the pi electrons of the aromatic ring of the electrolyte component, that is to say, owing to pi-pi stacking, the carbon support and the electrolyte component can exist in the vicinity of each other and aggregation of the carbon support is suppressed. In this case, it is preferable that the abovementioned physical approach means which can make the carbon support and the electrolyte component approach each other is provided to a coexistence state of the carbon support and the electrolyte component.

Therefore, the frequency that the electrolyte component and the catalyst component exist in a group of carbon support is increased. This is advantageous in closely contacting the three of the carbon support, the catalyst component and the electrolyte component. Hence, three-phase boundaries are satisfactorily formed.

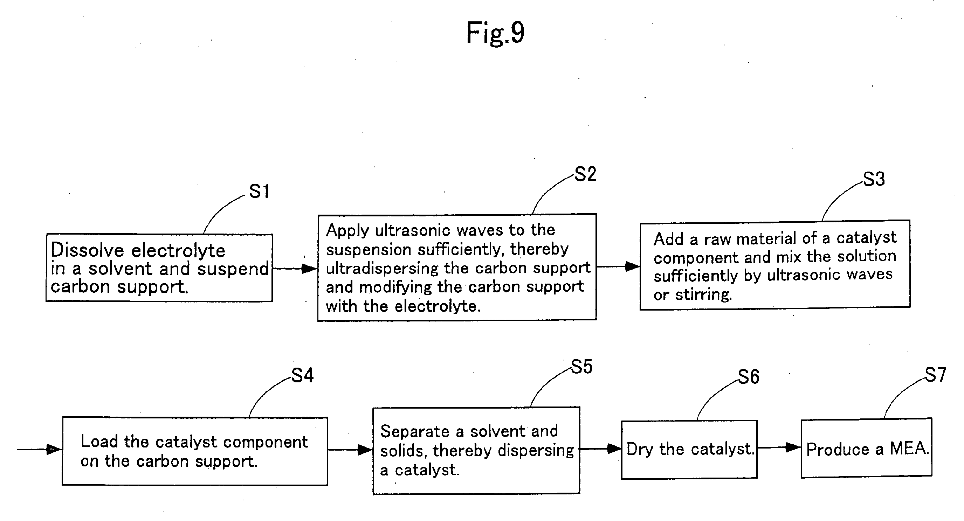

According to an embodiment of the production process according to the second aspect, as shown in the flowchart of Figure 9, first an electrolyte component is dissolved in a solvent and at the same time a carbon support such as carbon nanotubes is added, thereby forming a suspension (Step S1). As the solvent, any solvent which can dissolve the electrolyte component can be employed and it can be either an organic solvent or an inorganic solvent. The solvent can be exemplified by DMSO, THF, and alcohols. If the electrolyte component can be dissolved in water, the solvent can be water. Next, ultrasonic waves are sufficiently applied to the suspension (Step S2). Owing to this, the carbon support such as carbon nanotubes is ultradispersed in the suspension and at the same time the carbon support is modified with the electrolyte component, thereby forming a prepared solution. In this case, owing to pi-pi stacking, the carbon support and the electrolyte component can approach each other with good affinity and the electrolyte component tends to exist among the carbon support. Output power of the ultrasonic waves is not particularly limited but it is preferable to disperse the carbon support uniformly. In this case, it is preferable to apply ultrasonic waves while suppressing destruction of necessary functions of the respective materials.

Next, a raw material of a catalyst component is added to the prepared solution and ultrasonic waves are sufficiently applied, thereby sufficiently mixing the carbon support, the electrolyte component and the catalyst component (Step S3). The catalyst component is not particularly limited. Furthermore, the catalyst component is loaded on a surface of the carbon support such as carbon nanotubes (Step S4). The loading method can be a known method and is not limited particularly. Examples of the loading method include thermal decomposition method, colloid method, impregnation method, adsorption method, and reduction method. The reduction method includes gas phase reduction, liquid phase reduction and solid phase reduction but it is preferable to employ liquid phase reduction. Examples of a reductant include alcohols, hydrazine, sodium borohydride, and hydrogen gas. Depending on circumstances, it is also effective to apply outer force such as heat together with the addition of the reductant.

Next, a solvent and solids of the prepared solution are separated, thereby obtaining a catalyst (solids) by separation (Step S5). Although not particularly limited, the method for obtaining a catalyst by separation is exemplified by filtration and drying by condensation. Next, the material obtained by separation is dried at a predetermined temperature for a predetermined time, thereby obtaining a catalyst according to the present invention (Step S6).

Next, the catalyst is coated on surfaces of an electrolyte component membrane (e.g., a Nafion membrane) or a surface of gas diffusion layers, thereby producing a membrane electrode assembly (hereinafter also referred to as MEA) (Step S7). In this case, the catalyst of the present invention can be dispersed in a suitable solvent and then coat it. Or the catalyst of the present invention can be dispersed in a suitable binder and then coat it. The binder is exemplified by electrolyte components having ionic conductivity such as Nafion (produced by DuPont), Aciplex (produced by Asahi Kasei), and Flemion (produced by Asahi Glass). The binder also is also exemplified by resins having insulation properties, such as fluororesin (e.g., PTFE). Then, a laminated body is formed by sandwiching both sides of the electrolyte component membrane with gas diffusion layers. The laminated body is subjected to press forming or hot press forming in a laminating direction in order to enhance connectability. Thereby a MEA is produced. The MEA comprises an electrolyte component membrane having ionic conductivity, catalyst layers disposed on both thickness-direction sides of the electrolyte component membrane, and gas diffusion layers disposed on outer sides in the thickness direction of the catalyst layers. Each of the gas diffusion layers is in the form of a sheet having air permeability and generally comprises a laminated layer of a carbon material such as carbon fiber.

Note that the flowchart shown in Figure 9 is just an example and the order of Step S2 and Step S3 does not matter. In Step 1, Step S3 can be executed simultaneously. If not particularly required, Step S5 and Step S6 can be omitted. In this case, the solution at the termination of Step S4 can be coated as it is on surfaces of the electrolyte component membrane or a surface of the gas diffusion layers. Step S4 can be executed after Step S5, Step S6 or Step S7, depending on circumstances.

(3) The process for producing a catalyst for a fuel cell electrode according to the third aspect can form a catalyst for a fuel cell electrode according to the first aspect by comprising a loading step of contacting, in a solvent containing a dispersant, a carbon support having a pi-conjugated system and a catalyst component, thereby loading the catalyst component on the carbon support, and a modifying step of contacting the carbon support loaded with the catalyst component and an electrolyte component having an aromatic ring, thereby modifying the carbon support with the electrolyte component. A carbon support having a pi-conjugated system and a catalyst component are contacted with each other in a solvent containing a dispersant, thereby loading the catalyst component on the carbon support. Subsequently, the carbon support loaded with the catalyst component and an electrolyte component having an aromatic ring are contacted with each other, thereby modifying the carbon support with the electrolyte component. In the modifying step, it is preferable that the abovementioned physical approach means which can make the carbon support and the electrolyte component approach each other is provided to a coexistence state of the carbon support and the electrolyte component.

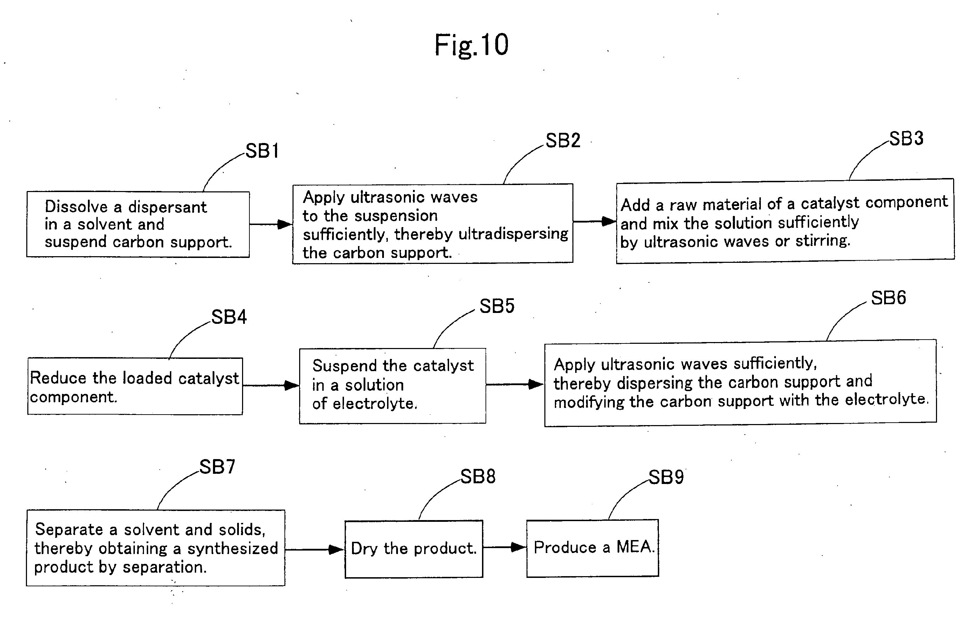

According to one embodiment of the production process according to the third aspect, as shown in the flowchart of Figure 10, first a dispersant is dissolved in a solvent, thereby forming a solution containing the dispersant. As the dispersant, a known surfactant can be employed. As the solvent, any solvent which can dissolve the electrolyte component can be employed, and it can be either an organic solvent or an inorganic solvent, and can be water. Water is advantageous in terms of aftertreatment and costs. Furthermore, a carbon support such as carbon nanotubes is added to the solution, thereby producing a suspension (Step SB1). The surfactant allows the carbon support to be easily dispersed. Next, ultrasonic waves are sufficiently applied to the suspension, thereby ultradispersing the carbon support (Step SB2). Next, a raw material of a catalyst component is added to the solution and furthermore, the solution is' sufficiently mixed by ultrasonic waves or stirring (Step SB3). Next, the catalyst component loaded on the carbon support is reduced (Step SB4).

Next, a solution of an electrolyte component is prepared. The catalyst is added to the solution and suspended, thereby producing a suspension. Next, ultrasonic waves are sufficiently applied to the suspension, thereby ultradipersing the carbon support and modifying the carbon support with the electrolyte component (Step SB6). The solution thus formed is separated into a solvent and solids, thereby obtaining a synthesized product by separation (Step SB7). Next, the synthesized product is dried at a predetermined temperature for a predetermined time (Step SB8). Thereby a catalyst of the present invention is obtained.

Next, the catalyst of the preset invention is coated on surfaces of the electrolyte component membrane (for example, a Nafion film) or a surface of gas diffusion layers, thereby producing a MEA (Step SB9) . In this case, the catalyst of the present invention can be dispersed in a suitable solvent and then coated. Or the catalyst of the present invention can be dispersed in a suitable binder and then coated. The binder is exemplified by electrolyte components having ionic conductivity, such as Nafion (produced by DuPont), Aciplex (produced by Asahi Kasei) and Flemion (produced by Asahi Glass). The binder is also exemplified by resins having insulating properties such as fluororesin (e.g., PTFE). Then a laminated body is formed by sandwiching both sides of the electrolyte component membrane with gas diffusion layers. The laminated body is subjected to press forming or hot press forming in the laminated direction to enhance connectability. Thereby a membrane electrode assembly (hereinafter also referred to as MEA) is produced.

Note that in Figure 10, the order of Steps SB4, SB5, SB6 does not matter. Steps SB7, SB8 can be omitted, depending on circumstances. The solution at the termination of Step SB6 can be coated as it is on surfaces of the electrolyte component membrane or a surface of the gas diffusion layers.

(4) The present invention will be described in more detail. The abovementioned carbon support can be any carbon material which has electron conductivity and a pi-conjugated system such as Graphene sheets. In an exemplary embodiment, the carbon support is one or more of carbon nanotubes (including carbon nanohorns), carbon black, graphite, carbon nanowalls, and carbon fiber. The carbon nanotubes can have a particular chiral vector.

In an exemplary embodiment, the abovementioned catalyst component comprises at least one of transition metals such as Pt, Rh, Pd, Au, Ru, Os, Ir, Co, Fe, Ni, Ti, Mn, Cr, V, Zr, Nb, Mo, Ta, W, Tc, and Re, typical elements such as Al and Mg, alloys containing two or more of these elements, and chemical compounds containing one or more of these elements. Examples of the chemical compounds include oxides, chlorides, carbides, sulfides, and nitrides. Examples of the chemical compounds can be mononuclear or multinuclear metal complexes such as N4 cyclic complexes such as porphyrin, phthalocyanine, and tetraazaannulene. A catalyst component source is not particularly limited. Examples of the catalyst component source include chlorides, nitrates, and metal complexes, but basically it is preferable to employ what can be dissolved in a solvent to be used. The amount of the catalyst component loaded is not particularly limited but generally can be about 10 to 70 % by mass or about 20 to 60 % by mass based on the total mass of the catalyst component and the carbon support.

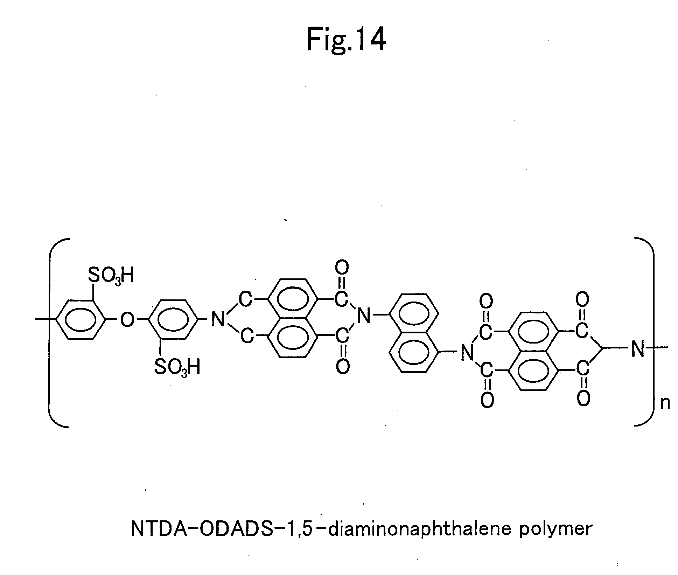

(5) The electrolyte component according to the present invention will be described in more detail. The electrolyte component according to the present invention can exhibit ionic conductivity (proton conductivity). The electrolyte component has an aromatic ring such as a benzene ring and a naphthalene ring on its main chain or side chain. Preferably the electrolyte component has affinity with the carbon support. Therefore, as the electrolyte component, it is possible to employ electrolyte components having, in their main structure, one or more substituents which conduct protons or a site which can be replaced in subsequent steps. An example of the electrolyte component is NTDA-ODADS-1,5-diaminonaphthalene polymer (See Fig.14).

The functional group which conduct protons can be any known one. Examples of the proton-conductive group include sulfonic acid, phosphonic acid, and imidazole. The proton-conductive group is not always necessary at the time of dispersing the carbon support and can be added by modification in subsequent steps, depending on circumstances.

(6) In an exemplary embodiment, the abovementioned electrolyte component contains wholly aromatic polyimide having a repetition unit represented by the following general formula [I].

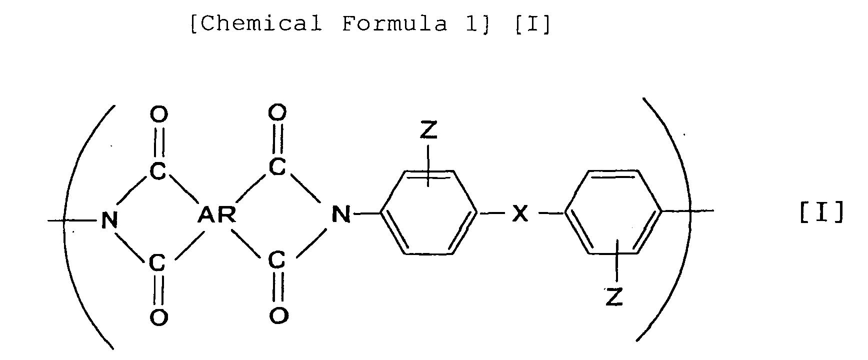

Here, in the formula [I], AR represents an aromatic group. X is sometimes omitted and, when not omitted, X represents an oxygen atom or a sulfur atom. Z represents a polar substituent or a nonpolar substituent for increasing solvent solubility.

As mentioned before, in the above formula [I] which expresses a repetition unit of polyimide constituting the electrolyte component of the present invention, AR represents an aromatic group, X is sometimes omitted and, when not omitted, X represents an oxygen atom or a sulfur atom, and Z represents a polar substituent or a nonpolar substituent for increasing solvent solubility. Preferred examples of a multinuclear aromatic group represented by AR include tetravalent functional groups (which can be substituted) comprising a naphthalene ring, an anthracene ring, a phenanthrene ring, a pyrene ring, a perylene ring, a naphthacene ring or the like.

Besides, in the abovementioned formula [I], the polar substituent represented by Z is a functional group which renders solubility in a polar solvent to the aforementioned polyimide and its preferred examples include a sulfonic acid group, a phosphate group, a sulfate group or trialkylamine salts thereof, although the polar substituent is not limited to these. Here, preferably the alkyl of the trialkylamine salts has 10 to 18 carbon atoms and particularly preferably 10 to 12 carbon atoms. The polyimide of the formula [I] having such a polar substituent is soluble in a polar solvent. The polar solvent is not limited to an aprotic solvent and can be a polar protic solvent (e.g., water, methanol, ethanol, propanol, and butanol) but generally it is preferable that the polar solvent is a polar aprotic solvent (e.g., dimethylsulfoxide (DMSO), dimethylformamide (DMF), m-cresol, and acetonitrile).

The wholly aromatic polyimide represented by the abovementioned formula [I] can have a nonpolar substituent as Z. Preferred examples of the nonpolar substituent include long-chain alkyl groups (which can be branched) having 8 to 18 carbon atoms, but the nonpolar substituent is not limited to these. The polyimide of the formula [I] such a polar substituent can be dissolved in a polar solvent (e.g., hexane, benzene, toluene, diethyl ether, and chloroform). Thus, preferred polyimides constituting the electrolyte component of the present invention are polyimides having a repetition unit represented by the following formula [P1], [P2], [P3], or [P4]. However, the polyimide is not limited to these.

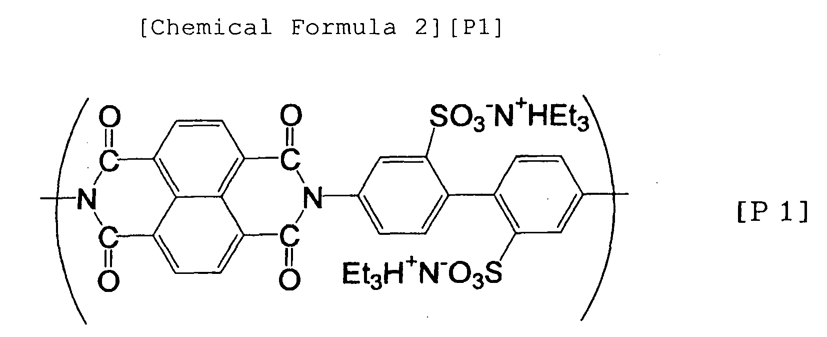

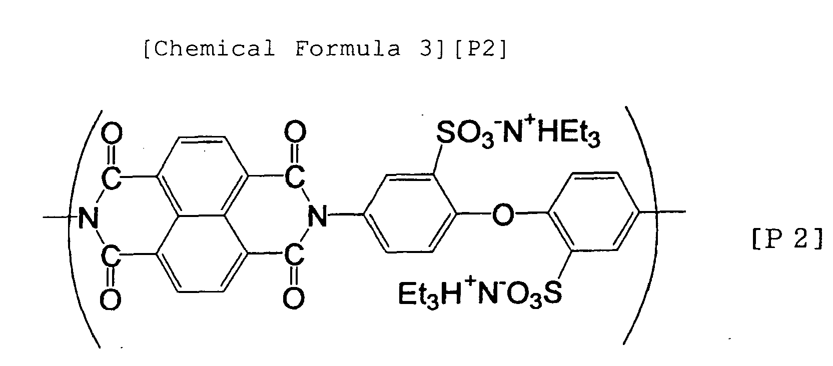

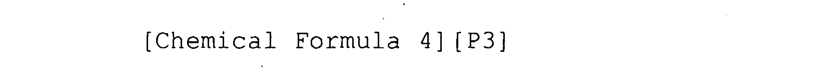

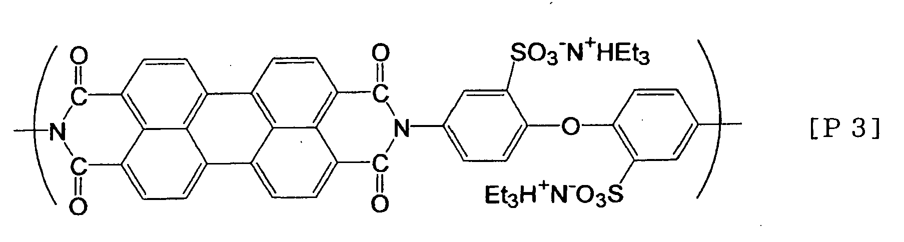

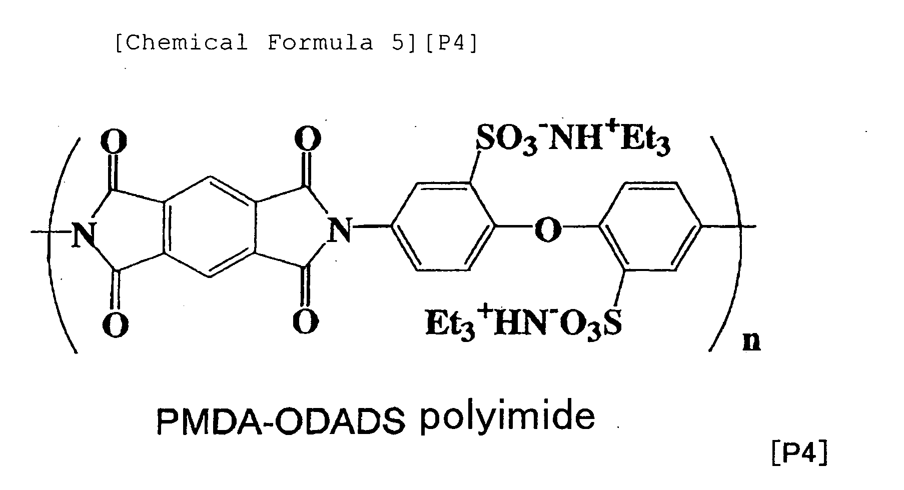

Note that in the formulas [P1], [P2], [P3] and [P4], Et represents an ethyl group.

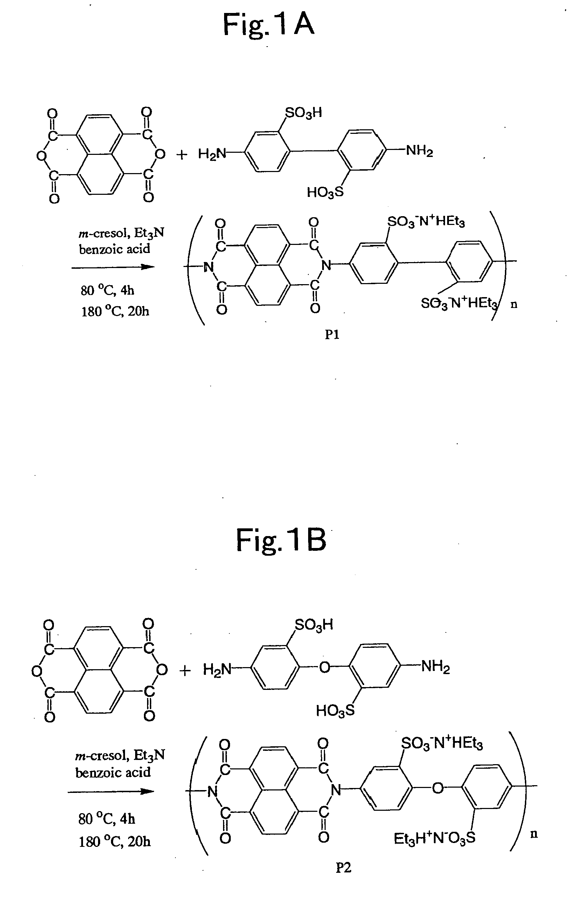

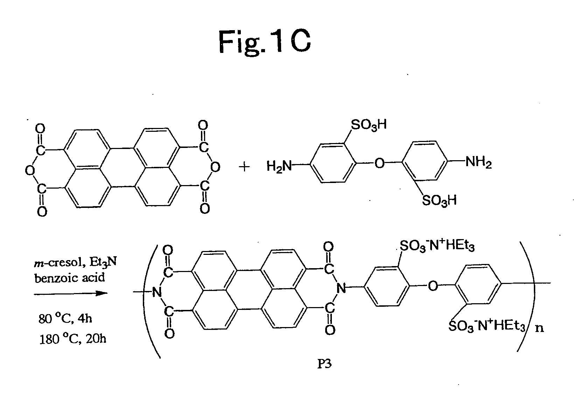

The wholly aromatic polyimide comprising a repetition unit represented by the abovementioned formula [I] can be synthesized by combining various kinds of reactions. Figure 1A, Figure 1B, and Figure 1C show synthesis schemes of wholly aromatic polyimides comprising repetition units represented by the abovementioned formulas [P1], [P2], [P3] and [P4]. As shown in Figure 1, generally the solvent is m-cresol. Desired wholly aromatic polyimides can be obtained by heating dianhydride and diamine as raw materials at 80 °C for 4 hours and at 180 °C for 20 hours in the presence of triethylamine and benzoic acid, allowing the resultants to reprecipitate in acetone and collecting precipitates. (See the document below.)

Document: J. Fang et al, Macromolecules, 35, 9022 (2002)

The wholly aromatic polyimide represented by the above formula [I] is soluble at room temperature. Using this property, carbon nanotubes can be solubilized in the following way: First, wholly aromatic polyimide is dissolved in such a polar or nonpolar solvent as the abovementioned. Next, carbon nanotubes are added to the thus-obtained solvent solution of the wholly aromatic polyimide. Furthermore, ultrasonic waves are radiated onto the obtained solvent solution in which the wholly aromatic polyimide and the carbon nanotubes are mixed. If necessary, the solution after the ultrasonic radiation is subjected to centrifugal separation, thereby securely removing bundled carbon nanotubes. Note that even the wholly aromatic polyimide having a repetition unit represented by the abovementioned formula [I] is not dissolved in any organic solvent if a portion corresponding to Z is a hydrogen atom.

By using the above mentioned wholly aromatic polyimide it is confirmed by measurement of visible to near-infrared absorption spectra and the like that when the CNTs are solubizied in the abovementioned way, in a wide concentration range of the CNTs, respective carbon nanotubes are independently (isolatedly) dissolved. Namely, as the CNT concentration increases, the solution gradually increases its viscosity and finally forms a gel. Here, it is recognized that the CNTs keep an unbundled state in any region of a low concentration solution, a viscous solution and a gel. (See Examples 2 and 3, which will be described later.)

Another characteristic of the solubilization method of the present invention using wholly aromatic polyimide having a multinuclear aromatic portion is to be capable of selectively solubilizing nanotubes of several structures having particular chiral vectors. For example, when wholly aromatic polyimide having a repetition unit represented by the aforementioned formula [P2] is used, particularly single walled carbon nanotubes having chiral indices (8, 6) can be solubilized in contrast to the case where an ordinary surfactant is used. (See Example 4, which will be described later.) This is assumed to be because this solubilization method is different in solubilization mechanism from a solubilization method of forming an aqueous micellar solution by using a surfactant (See the following document.).

Document: R. E. Smalley et al, Science 298, 2361 (2002)

A solution or a gel containing a composite body comprising wholly aromatic polyimide and carbon nanotubes can be obtained by carrying out the solubilization method mentioned heretofore. Such a solution or a gel can be subjected as it is to a film forming step, an extrusion molding step or the like for shaping a material comprising the aforementioned wholly aromatic polyimide/CNT composite body.

Moreover, the wholly aromatic polyimide/CNT solution obtained by once solubilizing the CNTs by the abovementioned solubilization operations can be mixed with another solvent, especially a polar solvent such as water, ethanol and acetonitrile. Moreover, even when the solution is diluted with such a solvent, respective CNTs keep independently dissolved (See Example 5, which will be described later). Therefore, for example, a composite system in which a component which is soluble in such a solvent is added can be prepared by using this characteristic.

Note that, as known well, carbon nanotubes are classified into single-walled carbon nanotubes (abbreviated as SWCNTs or SWNTs) and multi-walled carbon nanotubes (abbreviated as MWCNTs or MWNTs). The abovementioned solubilization mechanism can be applied to multi-walled carbon nanotubes, but particularly suitably applied to single-walled carbon nanotubes. "Carbon nanotubes" or "CNTs" used in this description mainly refer to single-walled carbon nanotubes, but can be applied to multi-walled carbon nanotubes.

Hereinafter, examples will be described in order to show characteristics of the present invention in more detail. However, the present invention is not limited by these examples.

Note that materials and measuring devices used in the examples are as follows.
Carbon nanotubes:
Refined SWNTs (HiPco) purchased from Carbon Nanotechnologies
Co.
Measurement of UV/visible/NIR absorption spectra:
Spectrophotometer JASCO, V-570
Measurement of NIR fluorescence spectra:
Fluorescence Spectrometer Horiba Spex Fluorolog: NIR Intermolecular force microscope:
   Nanoscope IIIa (produced by Veeco Instruments Inc.)

[Example 1]

Wholly Aromatic Polyimide Synthesis

Wholly aromatic polyimides having repetition units of the aforementioned formulas [P1], [P2], and [P3][hereinafter, described as (wholly aromatic) polyimides P1, P2, P3 or simply as P1, P2 and P3] were synthesized in accordance with the reaction schemes (A), (B) and (C) shown in Figure 1. Identification of products was carried out by ¹H-NMR and FT-IR measurements.

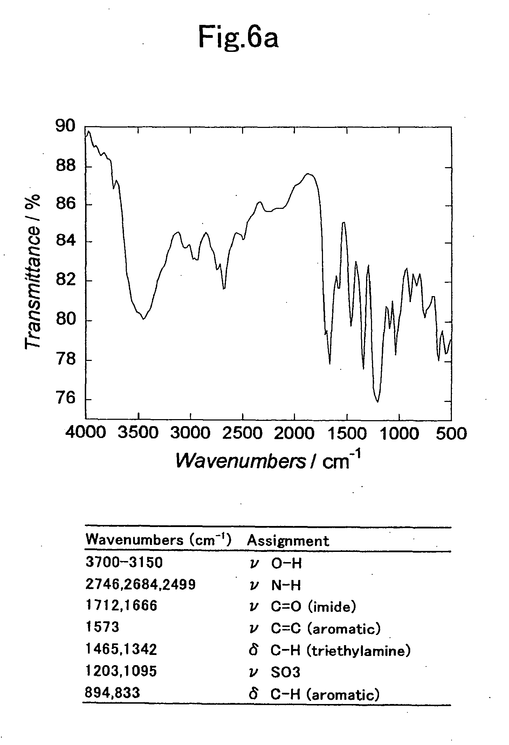

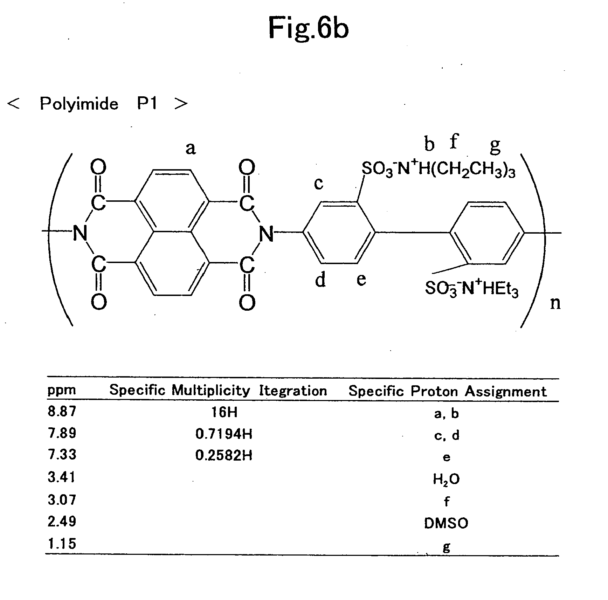

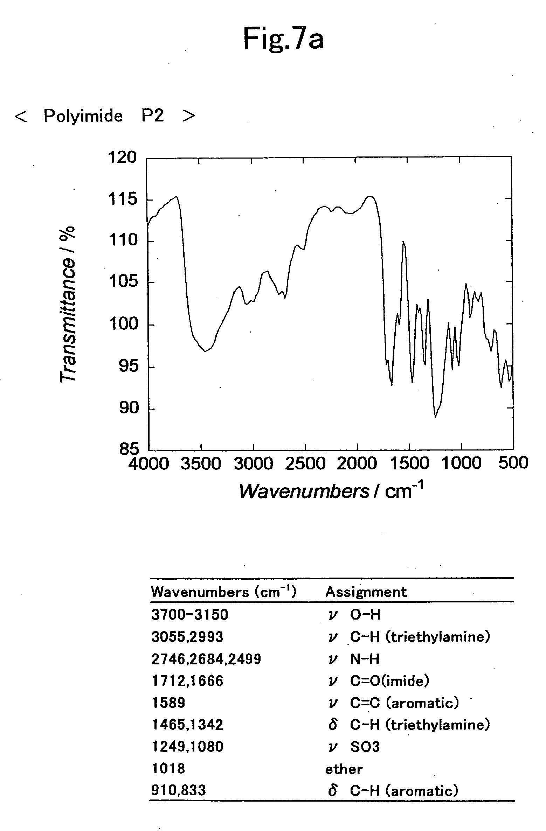

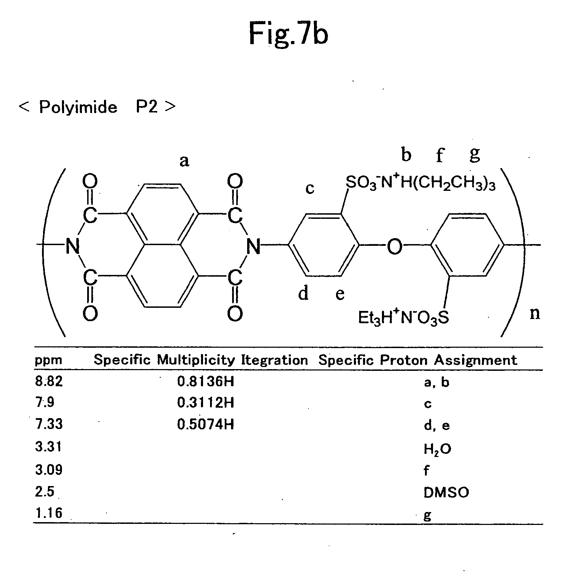

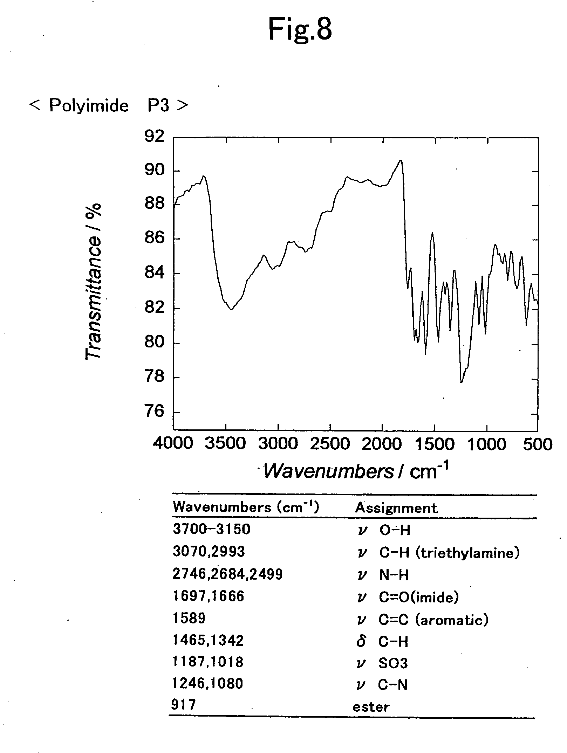

As identification data, FT-IR measurements of P1 are shown in Figure 6a. ¹H-NMR measurements of P1 are shown in Figure 6b. FT-IR measurements of P2 are shown in Figure 7a. ¹H-NMR measurements of P2 are shown in Figure 7b. FT-IR measurements of P3 are shown in Figure 8.

[Example 2]

Solubilization Test

A carbon nanotube solubilization test was conducted by using the wholly aromatic polyimides synthesized in the abovementioned Example 1. Each of the wholly aromatic polyimides was dissolved in DMSO, thereby preparing DMSO solutions containing the respective wholly aromatic polyimides at a concentration of 1 mg/mL. Refined SWNTs were added and the DMSO solutions were subjected to ultrasonic treatment for 15 minutes, and then subjected to visual observation and adsorption spectrum measurement. Then the SWNT concentration was increased and similar operations were repeated. The SWNT concentration was in the range from 0.1 to about 3 mg/mL (the weight ratio of SWNTs to polyimide: 0.1 to 3).

In each case, it was recognized that as the SWNT concentration increased, the viscosity of the solution gradually increased and, beyond a certain concentration, the solution formed a gel. Namely, in the case of the polyimide P1, the solution started getting viscous in the vicinity of a weight ratio of the SWNTs to the polyimide of about 0.98 and when the ratio exceeded about 1.7, gel formation was observed. When the polyimide P2 was used, the solution started getting viscous at a weight ratio of the SWNTs to the polyimide of about 1.4 and when the ratio exceeded about 1.8, a gel was formed. Similarly, when the polyimide P3 was used, the solution started getting viscous around a weight ratio of the SWNTs to the polyimide of about 1.7, and when the ratio exceeded about 2.5, gel formation was observed.

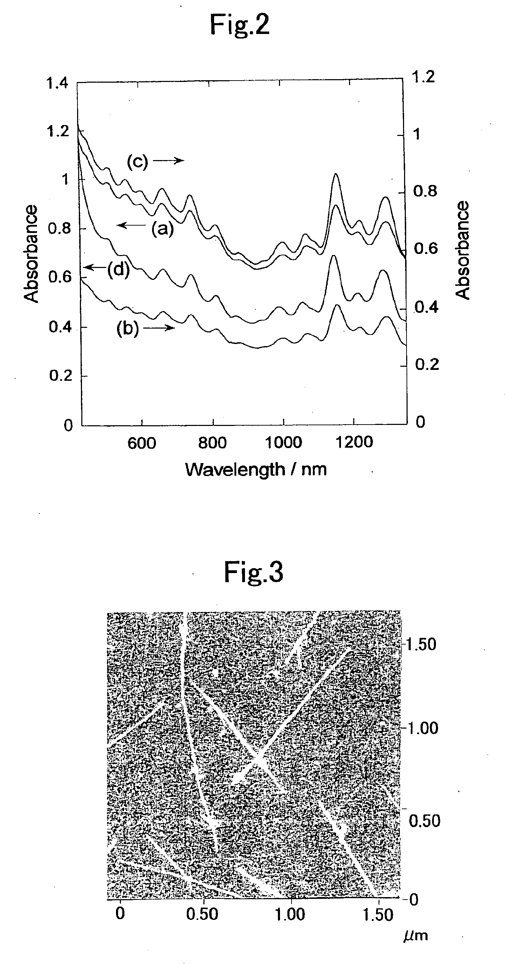

The measurement of visible to near-infrared absorption spectra in the abovementioned solubilization test confirmed that in each case, the SWNTs were kept unbundled. As a typical example, visible to near-infrared absorption spectra measured in the solubilization test by using the polyimide 2 are shown in Figure 2.

The measurement of the near-infrared absorption spectra is one of the means for demonstrating that there are carbon nanotubes which lose a bundle structure and are individually dissolved in a solution or a dispersion system (See the following document).

Document: R. E. Smalley et al, Science 297, 593(2002)

As shown in Figure 2, when carbon nanotubes were solubilized by using wholly aromatic polyimide corresponding to the electrolyte component of the present invention, observed in a near-infrared region are characteristic spectra caused by the fact that the SWNTs were individually dissolved over a wide SWNT concentration range. Namely, waveforms and peak positions of the spectra measured about the viscous solution (the spectrum b in Figure 2) and the gel (the spectrum c in Figure 2) were substantially the same as those measured about the solution with a low concentration of SWNTs (the spectrum a in Figure 2) and a sample obtained by subjecting the aforementioned DMSO solution to centrifugal separation (10000g) (the spectrum d in Figure 2). These results support that the viscous solution and the gel of the SWNTs comprise individually dissolved SWNTs and that an unbundled state was also kept in the viscous solution or the gel.

[Example 3]

AFM Observation

AFM (atom force microscope) observation was carried out on the DMSO solutions of the SWNT/wholly aromatic polyimide composite body obtained in the abovementioned Example 2. Samples were prepared by immersing a mica substrate in the aforementioned solutions and then washing and vacuum drying the resultants.

As a typical example, an AFM image of the solution using the wholly aromatic polyimide P2 is shown in Figure 3. The figure shows that 95 % or more of the SWNTs have a diameter in the range from 0.7 to 2. 0 nanometers and that most of the SWNTs are individually dissolved. This agrees with the results shown by the near-infrared absorption spectra of Example 2.

[Example 4]

Three-Dimensional Fluorescence Spectrum Measurement

Fluorescence emission in a near-infrared region can also confirm that the SWNTs have lost a bundle structure and are individually dissolved in the solution. It is known from documents that the chiral vectors of SWNTs can be determined by mapping excitation spectrum wavelengths onto emission spectrum wavelengths.

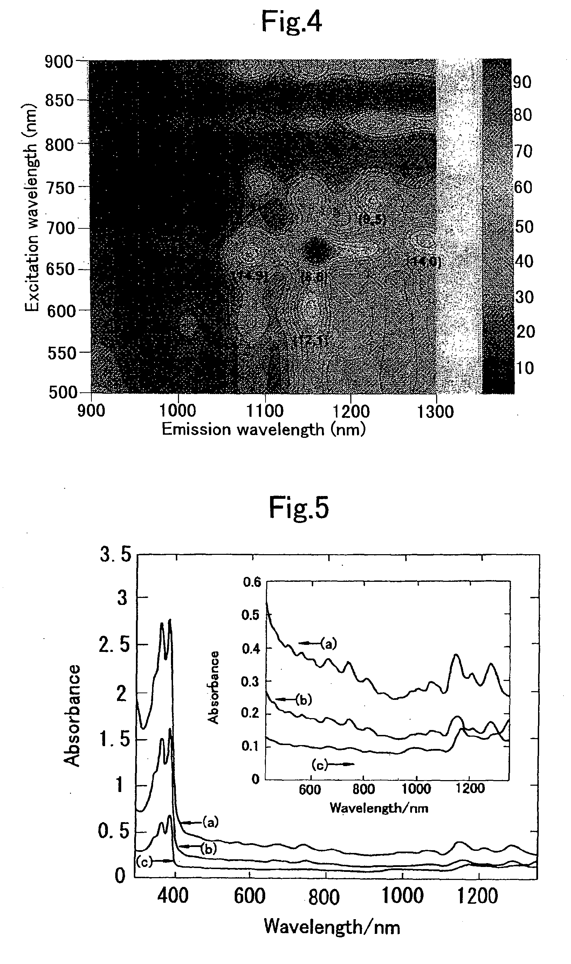

Therefore, three-dimensional fluorescence spectrum measurement was carried out on the DMSO solutions of SWNTs and wholly aromatic polyimide obtained in the above Example 2. As a typical example, the results in the case of using the wholly aromatic polyimide of P2 are shown in Figure 4. Samples were prepared by subjecting the aforementioned solutions to centrifugal separation at 10000 g for three hours.

As shown in Figure 4, the existence of (8, 6), (9, 5), (12, 1), (14, 0) and (14, 9) SWNTs is recognized and the intensity of (8, 6) SWNTs is particularly large. These SWNTs are different from SWNTs in an aqueous micellar solution in the case of using a surfactant, SDS (sodium dodecyl sulfate), and it is assumed that carbon nanotube solubilization of the present invention proceeds through a unique mechanism.

[Example 5]

Test for Mixing with Other Solvents

The DMSO solutions of SWNTs and wholly aromatic polyimide obtained by the operations of Example 2 were mixed with water, acetonitrile or ethanol. As a typical example, Figure 5 shows measurements of absorption spectra when the DMSO solution of SWNTs and polyimide using the wholly aromatic polyimide P1 was mixed with water. In this figure, (a) denotes an undiluted solution before mixing, (b) denotes a mixed solution of water: the DMSO solution = 1:1, and (c) denotes a mixed solution of water: the DMSO solution = 9:1. In each case, no substantial change was observed in absorption spectrum and it was confirmed that even when the solubilized solution was diluted with water, SWNTs were individually dissolved. Eye observation also confirmed that the SWNTs were kept solubilized uniformly. Similar results were obtained even when the solution was diluted with acetonitrile or ethanol.

[Example 6]

Polyimide Protonation

The wholly aromatic polyimides synthesized in the above Example 1 were protonated, thereby converting a triethylamine salt portion into a sulfonic acid group. The protonation was carried out by immersing the membranes of P1, P2 which were washed in heated ethanol in 1N-hydrochloric acid for 8 to 12 hours, and washing with ultrapure water and drying the resultants.

The polyimides obtained by protonating P1 and P2 in this way still maintained solubility in DMSO. A SWNT solubilization test was carried out in a similar method to Example 2 by using the DMSO solutions of protonated P1 and P2, and their visible to near-infrared absorption spectra were measured. Even when the protonated polyimides were used, the SWNTs could be solubilized in a similar way to the cases where P1 and P2 were used, and substantially the same absorption spectra could be obtained. Thus it was understood that the triethylaimine salt structure of P1 and P2 did not influence solubilization.

[Example 7]

Example 7 will be described. This example corresponds to a production process according to the second aspect and is an example of producing a MEA by using the abovementioned electrolyte component. Basic steps of this example are based on the flowchart shown in Figure 9. First, an electrolyte component (22.5 mg) was dissolved in a solvent (DMSO, 50 ml) and at the same time carbon nanotubes (15 mg) were added, thereby forming a suspension (Step S1). The electrolyte component was a polymer constituted by the abovementioned wholly aromatic polyimide.

Next, ultrasonic waves were applied to the suspension for one hour. In this case, the electrolyte component could serve as a dispersant for promoting carbon nanotube dispersion. Owing to this, the carbon nanotubes were dispersed and modified with the electrolyte component (Step S2).

Next, a solvent (DMSO, 50 ml) in which 26.6 mg platinum acetylacetonate was dissolved was dropped into the suspension in one hour. Ultrasonic waves were applied to the suspension for one hour, thereby sufficiently mixing the carbon nanotubes, the electrolyte component and the catalyst component (Step S3).

Moreover, NaBH₄ (40 mg) was added to the suspension and the resultant was stirred at a predetermined temperature (80 °C) for a predetermined time (12 hours), thereby loading Pt by reduction (Step S4). After the solvent of this prepared solution was removed by drying at 40 °C under reduced pressure, the resultant was washed with water and again vacuum dried at 80 °C, thereby obtaining a catalyst by separation (Step S5). Next, the catalyst obtained by separation was dried at a predetermined temperature (45 °C) under reduced pressure, thereby forming a catalyst according to the present invention (Step S6). Next, the catalyst according to the present invention was coated on surfaces of an electrolyte component membrane (e.g., a Nafion membrane), thereby producing a MEA (Step S7).

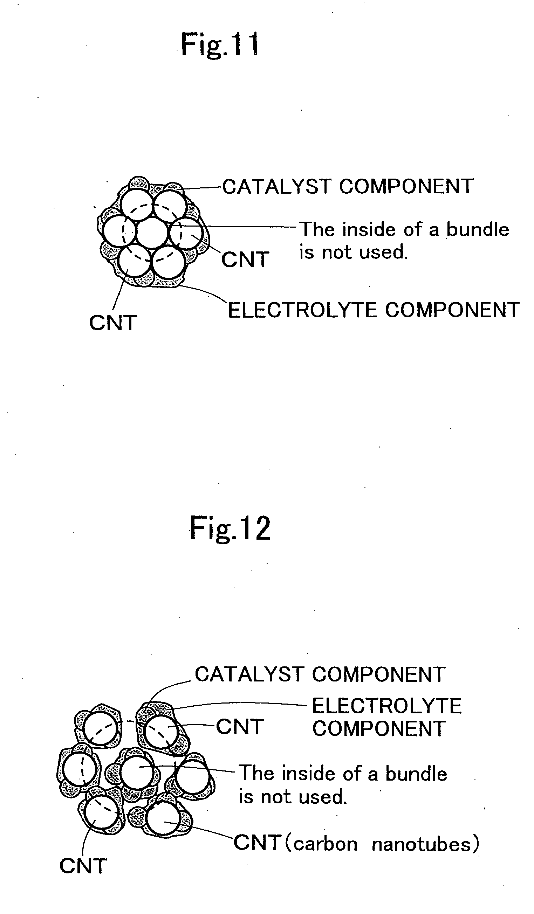

Figure 11 schematically shows a concept of a catalyst for a fuel cell electrode according to a conventional example. Figure 12 schematically shows a concept of a catalyst for a fuel cell electrode according to the present invention. As schematically shown in Figure 12, in the conventional example, a plurality of carbon nanotubes (CNTs), which are a carbon support, aggregate in a bundle structure. On the other hand, in the example of the present invention, as schematically shown in Figure 12, the dispersion degree of the carbon nanotubes, which are a carbon support, are improved and the electrolyte component exists among the carbon nanotubes. Owing to bi-bi stacking, the carbon nanotubes and the electrolyte component can closely approach each other. Therefore, aggregation of the carbon nanotubes is suppressed and the inside of bundles can be used. This is advantageous in closely contacting the three of the carbon nanotubes, the catalyst component and the electrolyte component with each other. Hence, three-phase boundaries are satisfactorily formed.

[Example 8]

Example 8 will be described. This example corresponds to a production process according to the third aspect and is an example of producing a MEA by using the abovementioned electrolyte component. Basic steps of this example are based on the flowchart shown in Figure 10. First, carbon nanotubes (16.5 mg) were added to an aqueous solution (45 ml) in which 1 wt % of a dispersant (sodium cholate) was dissolved, thereby producing a suspension (Step SB1). Next, ultrasonic waves were applied to the suspension for one hour, thereby dispersing the carbon nanotubes (Step SB2).

A platinum solution was prepared by dissolving, in water (90 ml), chloroplatinic acid (35. 9 mg) which served as a raw material of a catalyst component. This platinum solution was dropped into the abovementioned suspension in one hour, thereby forming a prepared solution. Then ultrasonic waves were applied to the prepared solution for one hour, thereby mixing the prepared solution sufficiently (Step SB3).

Next, NaBH₄ (37.5 mg) was added to the prepared solution and Pt was loaded by reduction at a predetermined temperature (80 °C) (Step SB4). After the solvent of the prepared solution was removed by drying at 80 °C under reduced pressure, the resultant was washed with pure water and again vacuum dried at 80 °C, thereby obtaining a catalyst by separation.

Next, the material obtained by separation was added to a solvent (an organic solvent, DMSO, 50 ml) in which an electrolyte component (24.75 mg) was dissolved, thereby forming a solution. The electrolyte component was a polymer constituted by the abovementioned wholly aromatic polyimide. Next, ultrasonic waves were applied to this solution for one hour, thereby ultradispersing the carbon nanotubes and at the same time modifying the catalyst with the electrolyte component (Step SB6). Then, the solution thus formed was separated into liquid and solids, thereby obtaining a synthesized product by separation (Step SB7). Next, the synthesized product was dried (Step SB8). Thereby, a catalyst of the present invention was formed. Subsequently, a MEA was formed in a similar way to the aforementioned (Step SB9).

In this example, the dispersion degree of the carbon nanotubes is improved and the electrolyte component exists among the carbon nanotubes. Therefore, owing to pi-pi stacking, the carbon nanotubes and the electrolyte component can closely approach each other. Therefore, aggregation of the carbon nanotubes is suppressed. This is advantageous in closely contacting the three of the carbon nanotubes, the catalyst component and the electrolyte component with each other. Hence, three-phase boundaries are satisfactorily formed.

[Example 9]

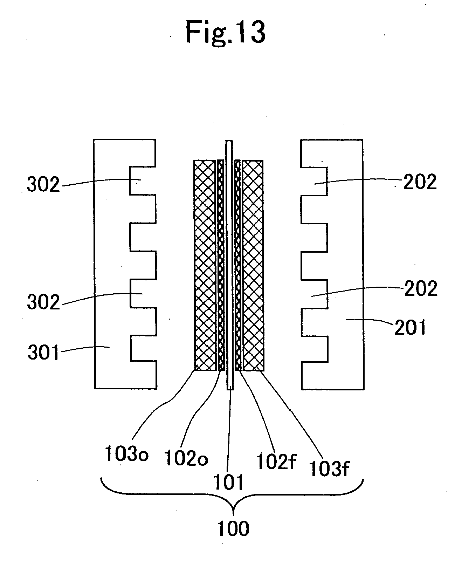

Example 9 will be described. Figure 13 schematically shows a concept of a cross section of an exploded fuel cell. As shown in Figure 13, a MEA 100 comprises an electrolyte component membrane (a Nafion membrane) 101 having ionic conductivity, a catalyst layer 102f for a fuel disposed on one side in the thickness direction of the electrolyte component membrane 101, a gas diffusion layer 103f for the fuel disposed on an outer side in the thickness direction of the catalyst layer 102f for the fuel, a catalyst layer 102o for an oxidant disposed on the other side in the thickness direction of the electrolyte component membrane 101, and a gas diffusion layer 103o for the oxidant disposed on an outer side in the thickness direction of the catalyst layer 102o for the oxidant. Each of the gas diffusion layer 103f and the gas diffusion layer 103o is in the form of a sheet, and comprises a carbon fiber accumulated layer in order to permit passage of a gas as a fluid.

As shown in Figure 13, a fuel cell is equipped with the MEA 100, a fuel supply member 201 disposed on an outer side of the gas diffusion layer 103f for a fuel of the MEA 100 and forming a fuel channel 202 for supplying the fuel, and an oxidant supply member 301 disposed on an outer side of the gas diffusion layer 103 for an oxidant of the MEA 100 and forming an oxidant flow channel 302 for supplying an oxidant gas (generally, oxygen gas or the air). Each of the fuel supply member 201 and the oxidant supply member 301 is formed of a carbon material or a high corrosion-resistant metal material. The catalyst layers 102f, 102o of the MEA 100 contain the abovementioned catalyst according to the present invention, and aggregation of the carbon nanotubes is suppressed. As an oxidant, oxygen gas or the air is generally employed. As a fuel, hydrogen gas or a hydrogen-containing gas is generally employed.

### Industrial Applicability

The present invention can use a catalyst for a fuel cell electrode, a process for producing a catalyst for a fuel cell electrode, a membrane electrode assembly, and a fuel cell.

## Claims

1. A catalyst for a fuel cell electrode, **characterized in** containing a carbon support having a pi-conjugated system, an electrolyte component having an aromatic ring, and a catalyst component.

2. A catalyst for a fuel cell electrode according to claim 1, **characterized in that** the carbon support is one or more of carbon nanotubes (including carbon nanohorns), carbon black, graphite, carbon nanowalls, and carbon fiber.

3. A catalyst for a fuel cell electrode according to claim 1 or 2, **characterized in that** the catalyst component comprises at least one of Pt, Rh, Pd, Au, Ru, Os, Ir, Co, Fe, Ni, Ti, Mn, Cr, V, Zr, Nb, Mo, Ta, W, Tc, Re, Al, Mg, alloys containing two or more of these elements, and chemical compounds containing one or more of these elements.

4. A catalyst for a fuel cell electrode according to one of claims 1 to 3, **characterized in that** the electrolyte component contains wholly aromatic polyimide having a repetition unit represented by the following general formula [I]. 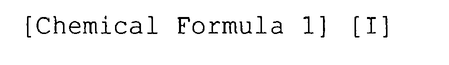 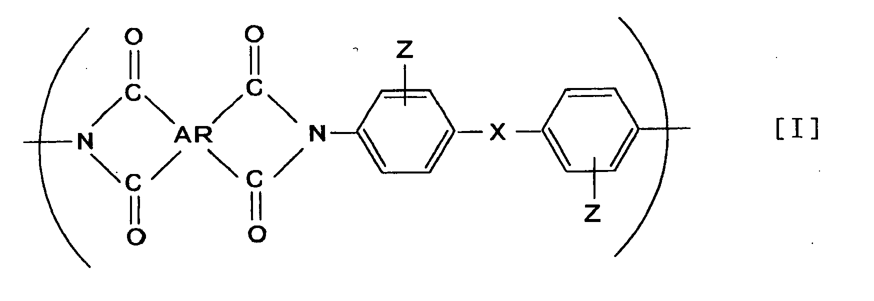 (In the formula [I], AR represents an aromatic group. X is sometimes omitted and when not omitted, X represents an oxygen atom or a sulfur atom. Z represents a polar substituent or a nonpolar substituent for increasing solvent solubility. )

5. A catalyst for a fuel cell electrode according to claim 4, **characterized in that** the polar substituent is sulfonic acid group, phosphate group, sulfate group, or trialkylamine salts thereof (the alkyl having 1 to 18 carbon atoms).

6. A catalyst for a fuel cell electrode according to claim 4, **characterized in that** the nonpolar substituent is a long-chain alkyl group (the alkyl group having 8 to 18 carbon atoms).

7. A catalyst for a fuel cell electrode according to one of claims 1 to 6, **characterized in that** the electrolyte component comprises wholly aromatic polyimide having a repetition unit represented by the following formula [P1], [P2], [P3], or [P4]. 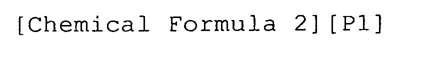 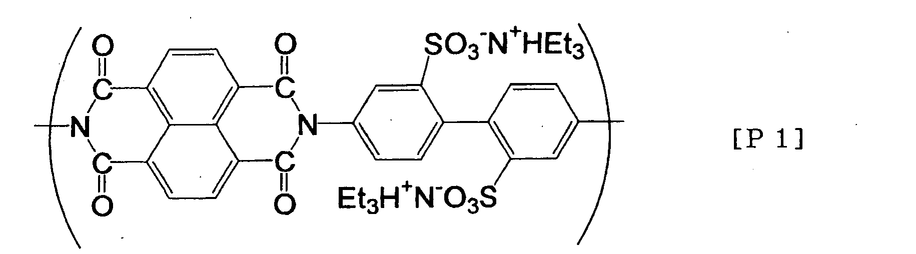 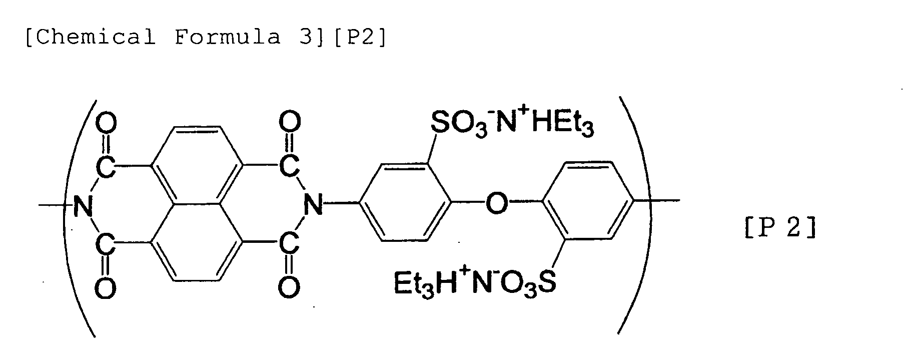 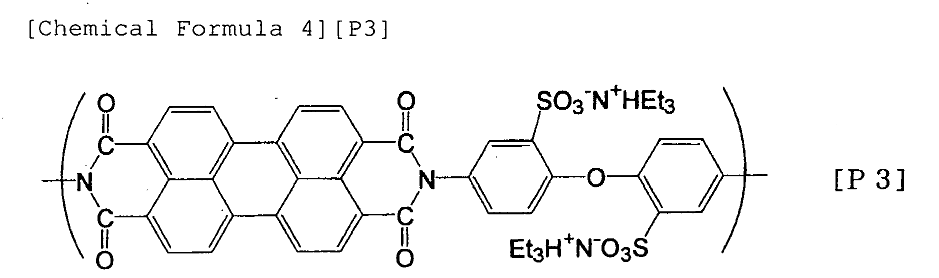 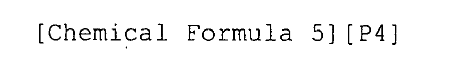 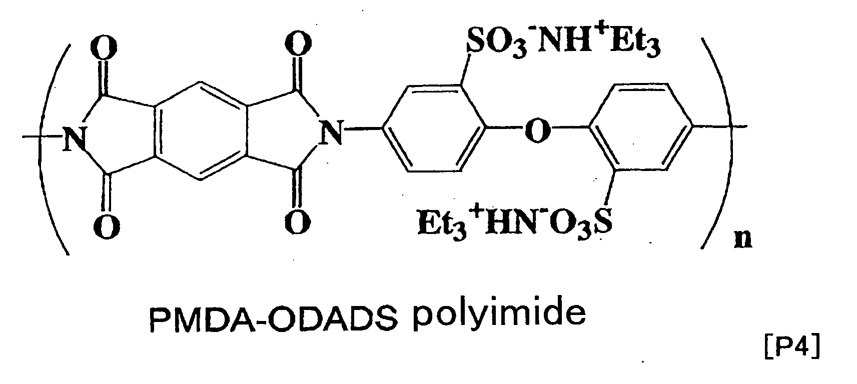 (In the formulas [P1], [P2], [P3] and [P4], Et represents an ethyl group. )

8. A process for producing a catalyst for a fuel cell electrode, **characterized in** contacting, in a solvent, a carbon support having a pi-conjugated system, an electrolyte component having an aromatic ring, and a catalyst component,
thereby modifying the carbon support with the electrolyte component and loading the catalyst component on the carbon support.

9. A process for producing a catalyst for a fuel cell electrode according to claim 8, **characterized in that** in contacting, in a solvent, the carbon support, the electrolyte component and the catalyst component, ultrasonic waves are applied to the solvent.

10. A process for producing a catalyst for a fuel cell electrode, **characterized in** comprising:
a loading step of contacting, in a solvent containing a dispersant, a carbon support having a pi-conjugated system and a catalyst component, thereby loading the catalyst component on the carbon support; and
a modifying step of contacting the carbon support loaded with the catalyst component and an electrolyte component having an aromatic ring, thereby modifying the carbon support with the electrolyte component.

11. A process for producing a catalyst for a fuel cell electrode according to claim 10, **characterized in that** in the loading step and/or the modifying step, ultrasonic waves are applied to the solvent.

12. A process for producing a catalyst for a fuel cell electrode according to one of claims 8 to 11, **characterized in that** the carbon support is one or more of carbon nanotubes (including carbon nanohorns), carbon black, graphite, carbon nanowalls, and carbon fiber.

13. A process for producing a catalyst for a fuel cell electrode according to one of claims 8 to 12, **characterized in that** the catalyst component comprises at least one of Pt, Rh, Pd, Au, Ru, Os, Ir, Co, Fe, Ni, Ti, Mn, Cr, V, Zr, Nb, Mo, Ta, W, Tc, Re, Al, Mg, alloys containing two or more of these elements, and chemical compounds containing one or more of these elements.

14. A process for producing a catalyst for a fuel cell electrode according to one of claims 8 to 13, **characterized in that** the electrolyte component contains wholly aromatic polyimide having a repetition unit represented by the following general formula [I]. 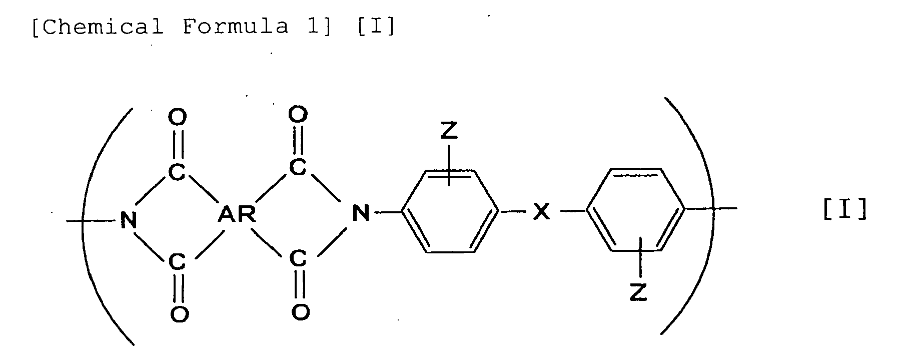 (In the formula [I], AR represents an aromatic group. X is sometimes omitted and when not omitted, X represents an oxygen atom or a sulfur atom. Z represents a polar substituent or a nonpolar substituent for increasing solvent solubility. )

15. A process for producing a catalyst for a fuel cell electrode according to claim 14, **characterized in that** the polar substituent is sulfonic acid group, phosphate group, sulfate group, or trialkylamine salts thereof (the alkyl having 1 to 18 carbon atoms).

16. A process for producing a catalyst for a fuel cell electrode according to claim 14, **characterized in that** the nonpolar substituent is a long-chain alkyl group (the alkyl group having 8 to 18 carbon atoms).

17. A process for producing a catalyst for a fuel cell electrode according to one of claims 8 to 16, **characterized in that** the electrolyte component comprises wholly aromatic polyimide having a repetition unit represented by the following formula [P1], [P2], [P3], or [P4]. 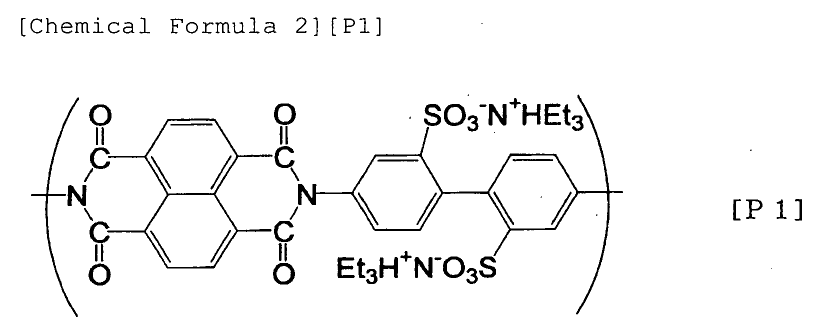 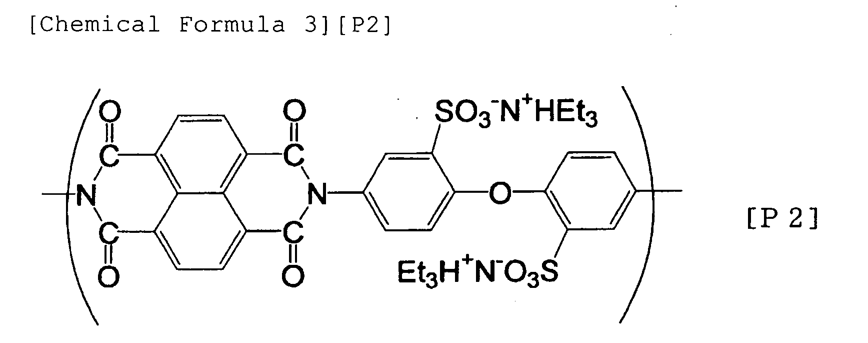 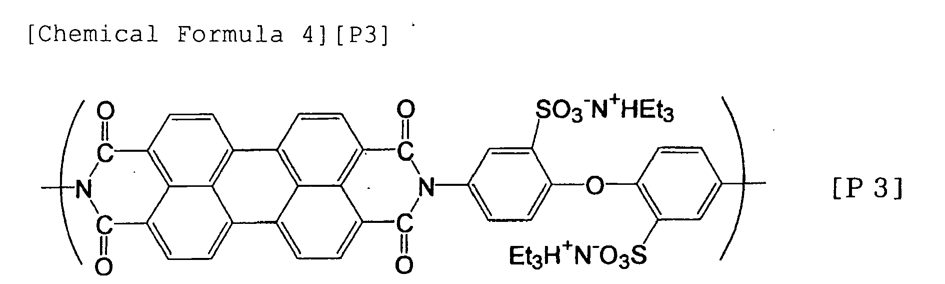 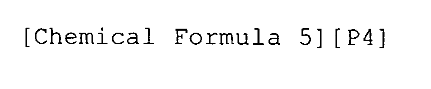 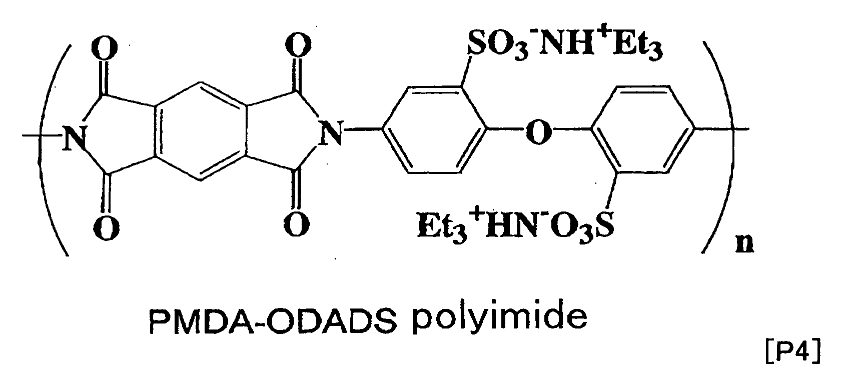 (In the formulas [P1], [P2], [P3] and [P4], Et represents an ethyl group.)

18. A membrane electrode assembly, including an electrolyte component membrane having ionic conductivity, catalyst layers disposed on outer sides of the electrolyte component membrane, and gas diffusion layers disposed on outer sides of the catalyst layers, and
**characterized in that** the catalyst layers contain the catalyst for a fuel cell electrode recited in one of claims 1 to 7.

19. A fuel cell, comprising:
a membrane electrode assembly including an electrolyte component membrane having ionic conductivity, catalyst layers disposed on both sides of the electrolyte component membrane, and gas diffusion layers disposed on outer sides of the catalyst layers;
a fuel supply member disposed on one outer side of the membrane electrode assembly and supplying a fuel; and
an oxidant supply member disposed on the other outer side of the membrane electrode assembly and supplying an oxidant, and
**characterized in that** the catalyst layers of the membrane electrode assembly contain the catalyst for a fuel cell electrode recited in one of claims 1 to 7.
